# EUROPÄISCHE PATENTSCHRIFT

(11) **EP 0 702 213 B1**
(45) Veröffentlichungstag und Bekanntmachung des Hinweises auf die Patenterteilung: **24.09.2003**
(21) Anmeldenummer: 95810199.0
(22) Anmeldetag: 23.03.1995
(51) Int. Cl.: G01F 1/84, B21D 39/06

(54) **Verfahren zum Fixieren der Messrohre eines Massedurchflussaufnehmers**
Fixation method of the conduits of a mass flow sensor
Procédé de fixation des tubes d'un capteur de débimètre massique

(30) Priorität: 19.09.1994 EP 94114725
(43) Veröffentlichungstag der Anmeldung: 20.03.1996
(73) Patentinhaber: Endress + Hauser Flowtec AG, CH-4153 Reinach BL 1 (CH)
(72) Erfinder: Eckert, Gerhard, D-79618 Rheinfelden (DE); Wenger, Alfred, Dr., CH-8413 Neftenbach (ZH) (CH); Lorenz, Rainer, D-79540 Lörrach (DE)
(74) Vertreter: Andres, Angelika

(56) Entgegenhaltungen:
- DE-A- 3 724 675
- US-A- 4 090 382
- US-A- 5 095 761

## Beschreibung

Die Erfindung beschäftigt sich mit der Fixierung des jeweiligen Endes von mindestens einem Meßrohr eines nach dem Coriolis-Prinzip arbeitenden Massedurchflußaufnehmers in einer jeweiligen Bohrung eines einlaßseitigen bzw. eines auslaßseitigen Übergangsstücks.

Prinzipiell gibt es bei Massedurchflußaufnehmern nur zwei Arten von Rohrverläufen, nämlich einerseits gerade Meßrohre und andererseits beliebig gebogene oder sogar gewundene Meßrohrschleifen, unter denen die U-förmigen die bevorzugten Rohrformen sind. Bei beiden Arten von Rohrverläufen werden aus Symmetriegründen meist zwei im Ruhezustand in zwei parallelen Ebenen parallel zueinander verlaufende gerade Meßrohre bzw. entsprechende Rohrschleifen verwendet.

Zu der einen der beiden Varianten mit zwei parallelen geraden Rohren kann rein beispielsweise auf die eigenen US-A 47 68 384 und US-A 47 93 191 sowie zu der anderen Variante mit zwei parallelen U-förmigen Rohrschleifen z.B. auf die US-A 41 27 028 verwiesen werden.

Ferner ist in der WO-A 87/06691 ein nach dem Coriolis-Prinzip arbeitender Massedurchflußaufnehmer beschrieben, bei dem das jeweilige Ende von mindestens einem Meßrohr in eine jeweilige Bohrung eines einlaßseitigen bzw. eines auslaßseitigen Übergangsstücks eingesteckt und darin durch stirnseitiges und rückseitiges Schweißen, Löten oder Hartlöten fixiert ist, vgl. die in einigen der Figuren zu sehenden Materialwülste. Die Übergangsstücke sind ihrerseits in einem äußeren Träger fixiert.

Schließlich ist in der US-A 50 95 761 ein Verfahren zum Fixieren des jeweiligen Endes von zwei Meßrohren eines nach dem Coriolis-Prinzip arbeitenden Massedurchflußaufnehmers in einer jeweiligen Bohrung eines einlaßseitigen bzw. eines auslaßseitigen Übergangsstücks beschrieben, wobei jedes Ende jeden Meßrohrs in die entsprechende Bohrung eingesteckt und darin ganzflächig verlötet wird.

Wie Untersuchungen gezeigt haben, hinterläßt die während des erwähnten Schweißens, Lötens oder Hartlötens nötige Wärmezufuhr an den Fixierstellen der Meßrohre mit den Übergangsstücken nach dem Abkühlen einen mechanischen Spannungszustand, der zu Spannungsriß-Korrosion führen kann, insb. wenn Fluide gemessen werden, die das Meßrohr-Material mehr oder weniger stark angreifen.

Dieses Problem löst die in Anspruch 1 definierte Erfindung durch ein anderes Fixier-Verfahren der Meßrohre in den Übergangsstücken, das die Gefahr der erwähnten Spannungsriß-Korrosion möglichst vollständig beseitigt.

Bevorzugte Weiterbildungen der Erfindung sind in den Ansprüchen 2 und 3 definiert.

Ein Walzwerkzeug, wie es beim Verfahren der Erfindung benutzt wird, ist in der US-A 40 90 382 zum Befestigen von Rohren von Boilern oder Wärmetauschern beschrieben.

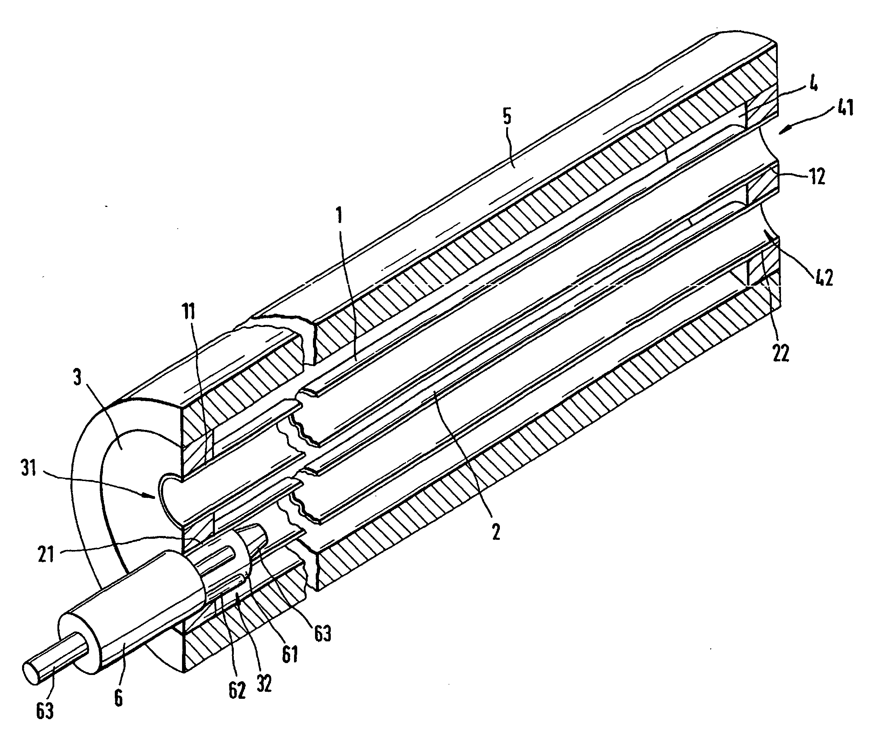

Die Erfindung wird nun anhand der Zeichnung näher erläutert, deren einzige Figur perspektivisch-schematisch in teilweise geschnittener Ansicht einen für das Verfahren der Erfindung wesentlichen Teil eines Ausführungsbeispiels eines Massedurchflußaufnehmers mit zwei parallelen, geraden Meßrohren zeigt.

Für die Erfindung wichtig sind die in der Figur der Zeichnung dargestellten Teile von Massedurchflußaufnehmern, während deren restliche und zur vollen Funktion ebenfalls erforderlichen Teile aus Übersichtlichkeitsgründen nicht dargestellt sind; insoweit wird auf die erwähnten Dokumente des Standes der Technik verwiesen.

Ein erstes gerades Meßrohr 1 mit einem einlaßseitigen Ende 11 und einem auslaßseitigen Ende 12 bzw. ein zweites Meßrohr 2 mit einem einlaßseitigen Ende 21 und einem auslaßseitigen Ende 22 sind in eine entsprechende Bohrung 31, 32 bzw. 41, 42 eines einlaßseitigen Übergangsstücks 3 bzw. eines auslaßseitigen Übergangsstücks 4 positioniert. Die beiden Übergangsstücke 3, 4 sind in einem Träger ihrerseits fixiert. Dieser Träger kann z.B. ein massives Trägerrohr 5 sein.

Die Meßrohre 1, 2 sind im Betrieb in den Verlauf einer von einem zu messenden Fluid, z.B. von einer Flüssigkeit oder von einem Gas, durchflossene Rohrleitung eingesetzt, wozu z.B. Flansche oder Verschraubungen etc. dienen können. Somit fließt das zu messende Fluid auch durch die Meßrohre 1, 2.

Im Ausführungsbeispiel verlaufen die Meßrohre 1, 2 parallel zueinander. Die Meßrohre 1, 2 werden in der von ihren Achsen gebildeten Ebene von einem, wie erwähnt, nicht dargestellten Schwingungserreger in zueinander entgegengesetzte Resonanz-Schwingungen versetzt.

Zwei ebenfalls nicht gezeichnete Detektoren für deren Schwingungen sind entlang der Meßrohre versetzt angeordnet. Aus der Phasendifferenz der Signale der Detektoren kann der Massedurchfluß und/oder aus der Schwingfrequenz der Meßrohre die Dichte des Fluids in üblicher Weise bestimmt werden.

Nach dem erwähnten Positionieren der Meßrohre 1, 2 in den Übergangsstücken 3, 4 wird ein Walzwerkzeug 6 in das Lumen des Endes des jeweiligen Meßrohrs 1, 2 eingebracht. Am in Einbringrichtung vorderen Ende trägt das Walzwerkzeug 6 einen Käfig 61 mit auf dessen kreisförmige Mantelfläche verteilten und in entsprechende Öffnungen eingesetzten Rollen 62.

Der Mittelpunktskreis, auf dem die Rollen 62 sich beim Drehen des Walzwerkzeug 6 bewegen, hat einen Radius, der mittels eines in Einbringrichtung verschiebbaren Stempels 63 verstellt werden kann. Durch Vergrößern dieses Radius im Vergleich zu demjenigen Radius, mit dem das Walzwerkzeug 6 in das Lumen der Meßrohre 1, 2 zunächst eingeführt wird, läßt sich deren jeweiliges Ende gegen die Innenwand der Bohrungen 31, 32 bzw. 41, 42 pressen.

Das jeweilige Ende 11, 21 bzw. 12, 22 der Meßrohre 1, 2 wird nun mit der Innenwand der jeweiligen Bohrung 31, 32 bzw. 41, 42 auf diese Weise ohne Wärmezufuhr verpreßt. Dadurch kommt es zu einem geringfügigen Fließen des Materials der Meßrohre 1, 2 und damit an diesen Stellen zu einer sehr festen mechanischen Verbindung.

Ferner kommt es zu einem geringfügigen Dünnerwerden der Wandstärke der Enden der Meßrohre 1, 2 und somit einerseits zu einer mechanischen Druckpannung in Längsrichtung des jeweiligen Meßrohrs, im folgenden kurz Axialspannung genannt, da die Meßrohre an sich, nämlich ohne Einspannung im Trägerrohr, geringfügig länger werden würden. Andererseits kommt es auch innerhalb der jeweiligen Bohrung 31, 32 bzw. 41, 42 zu einer mechanischen Druckspannung in Radialrichtung, im folgenden kurz Radialspannung genannt.

Die Radialspannung ist darauf zurückzuführen, daß während des Verpressens die Enden 11, 21, 12, 22 der Meßrohre 1, 2 plastisch verformt werden, dagegen die Übergangsstücke 3, 4 wegen ihrer gegenüber den Enden größeren Dicke im wesentlichen nur elastisch verformt werden und daß daher nach dem Verpressen die Übergangsstücke eine zum Zentrum der Enden gerichtete Radialkraft ausüben.

Die Radialspannung ist nun in erster Linie der Grund dafür, daß die hinderliche Spannungsriß-Korrosion praktisch vermieden werden kann, die bei den Massedurchflußaufnehmern des Standes der Technik immer auftritt, da die Enden von deren Meßrohren in das Einlaßverteilerstück bzw. in das Auslaßverteilerstück weich- oder harteingelötet oder eingeschweißt sind. Die Axialspannung trägt in demgegenüber weit geringerem Maße ebenfalls zu dieser Vermeidung bei.

Es war für die Erfinder überraschend, daß das geschilderte Verpressen, das bisher nur bei nichtbewegten, insb. bei nicht in Schwingungen versetzten Rohren, nämlich bei ruhenden Rohren von Boilern oder von Wärmetauschern, üblich war, besonders erfolgreich bei Meßrohren von Massedurchflußaufnehmern, die im Betriebszustand ja schwingen, angewendet werden kann und daß dadurch die obigen Nachteile des Verlötens bzw. des Verschweißens vermieden werden können.

Bei Massedurchflußaufnehmern mit mindestens zwei Meßrohren kann das Verpressen besonders vorteilhaft auch zum dynamischen, optimalen Ausbalancieren der Meßrohre dienen. Dies sei am Beispiel eines Massedurchflußaufnehmers mit zwei geraden Meßrohren, die von einem oben erwähnten Trägerrohr umgeben sind, näher erläutert, vgl. die Figur.

Zunächst werden die Übergangsstücke 3, 4 im Trägerrohr 5 fixiert; es ist auch möglich, Trägerrohr und Übergangsstücke aus einem Stück herzustellen. Dann werden die Enden 12, 22 der Meßrohre 1, 2 in den zugehörigen Bohrungen 41, 42 des Übergangsstücks 4 positioniert und darin mittels des Walzwerkzeugs 6 durch dessen Drehung auf der gesamten Länge dieser Bohrungen jeweils vorverpreßt; es wird also noch nicht der endgültige, gesamte Preßdruck angewendet.

Dann werden die Enden 11, 21 der Meßrohre 1, 2 in die zugehörigen Bohrungen 31, 32 des Übergangsstücks 3 positioniert. Das Ende 11 des einen Meßrohrs 1 wird darin mittels des Walzwerkzeugs 6 auf der gesamten Länge der Bohrung endgültig, also mit dem vorgesehenen Preßdruck, verpreßt.

Anschließend wird mittels des Walzwerkzeugs 6 das Ende 21 des anderen Meßrohrs 2 allerdings nur solange verpreßt, bis die Meßrohre dynamisch optimal ausbalanciert sind, d.h. der Stempel 63 des Walzwerkzeugs 6 wird so lange unter gleichzeitiger Drehung bewegt, bis die Balance erreicht ist.

Schließlich wird z.B. das zum Meßrohr 1 gehörende, bereits vorverpreßte Ende 12 in der Bohrung 41 des Übergangsstücks 4 endgültig, also mit dem vorgesehenen Preßdruck, verpreßt. Dann wird das zum Meßrohr 2 gehörende, bereits vorverpreßte Ende 22 mittels des Walzwerkzeugs 6 solange weiter verpreßt, bis die Meßrohre 1, 2 dynamisch optimal ausbalanciert sind.

Zur Ermittlung der optimalen dynamischen Balance wird auf dem Träger 5 ein Beschleunigungssensor angeordnet. Die Verpressung wird nur solange durchgeführt, bis das Signal dieses Sensors ein Minimum aufweist.

Falls jeweiliges Bohrungsende und jeweiliges Ende des Meßrohrs nach dem Verpressen bündig sein sollen, kann die entsprechende Fläche des Übergangsstücks - das ist in der Figur der Zeichnung dessen zu sehende Vorderfläche - mit einer als Anschlag dienenden Vorrichtung abgedeckt werden oder das jeweilige Meßrohr wird nicht ganz bis zum Ende der Bohrung eingeschoben.

## Patentansprüche

1. Verfahren zum Fixieren des jeweiligen Endes (11, 21) von mindestens einem Meßrohr (1, 2) eines nach dem Coriolis-Prinzip arbeitenden Massedurchflußaufnehmers in einer jeweiligen Bohrung (31, 32 bzw. 41, 42) eines einlaßseitigen bzw. eines auslaßseitigen Übergangsstücks (3 bzw. 4), das jeweils in einem äußeren Träger seinerseits fixiert ist, wobei jedes Ende des Meßrohrs in die entsprechende Bohrung eingesteckt und mittels eines in das Ende eingebrachten Walzwerkzeugs (6) durch dessen gleichzeitiges Drehen und Bewegen mit der Innenwand der Bohrung ohne Wärmezufuhr verpreßt wird.

2. Verfahren nach Anspruch 1, bei dem mindestens zwei Meßrohre (1, 2) im jeweiligen Übergangsstück (3, 4) nur solange verpreßt werden, bis die Meßrohre dynamisch optimal ausbalanciert sind.

3. Verfahren nach Anspruch 2, bei dem zur Ermittlung der optimalen dynamischen Balance auf dem äußeren Träger ein Beschleunigungssensor angeordnet wird und das jeweilige Meßrohr und das jeweilige Übergangsstück solange miteinander verpreßt werden, bis das Signal des Beschleunigungssensors ein Minimum aufweist.

## Claims

1. A method of fixing the respective end (11, 21) of at least one measurement tube (1, 2) of a mass through-flow pick-up operating in accordance with the Coriolis principle in a respective bore (31, 32 and 41, 42) of a respective transition member (3 and 4) at the inlet end and at the outlet end, which in turn is fixed in an outer support in each case, wherein each end of the measurement tube is inserted into the corresponding bore and by means of a rolling tool (6) inserted into it the end is pressed by the simultaneous rotation and movement of the latter against the inner wall of the bore without the supply of heat.

2. A method according to Claim 1, in which at least two measurement tubes (1, 2) are pressed in the respective transition member (3, 4) only until the measurement tubes are optimally dynamically balanced.

3. A method according to Claim 2, in which, in order to determine the optimum dynamic balance, an acceleration sensor is positioned on the outer support and the respective measurement tube and the respective transition member are pressed against each other until the signal of the acceleration sensor is at a minimum.

## Revendications

1. Procédé pour la fixation de chaque extrémité (11, 21) d'au moins un tube jaugeur (1, 2) d'un capteur de débit massique fonctionnant d'après le principe de Coriolis dans un alésage respectif (31, 32 ou 41, 42) d'un raccord de réduction (3 ou 4) situé côté admission ou situé côté évacuation, qui est respectivement fixé de son côté dans un support extérieur, moyennant quoi chaque extrémité du tube jaugeur s'insère dans l'alésage correspondant et, au moyen d'un outil de laminage (6) introduit dans l'extrémité, est comprimée par sa rotation et son mouvement simultanés avec la paroi intérieure de l'alésage sans introduction de chaleur.

2. Procédé selon la revendication 1, dans lequel au moins deux tubes jaugeurs (1, 2) ne sont comprimés dans chaque raccord de réduction (3, 4), que jusqu'au moment où les tubes jaugeurs sont dynamiquement équilibrés de façon optimale.

3. Procédé selon la revendication 2, dans lequel un capteur d'accélération est agencé pour repérer l'équilibre dynamique optimal sur le support extérieur et le tube jaugeur respectif et le raccord de réduction respectif sont comprimés l'un avec l'autre jusqu'à ce que le signal du capteur d'accélération présente une valeur minimale.
